# EUROPEAN PATENT SPECIFICATION

(11) **EP 4 335 292 B1**
(45) Date of publication and mention of the grant of the patent: **07.05.2025**
(21) Application number: 22195115.5
(22) Date of filing: 12.09.2022
(51) Int. Cl.: A01M 7/00

(54) **BOOM APPARATUS AND A METHOD FOR OPERATING A BOOM APPARATUS OF AN AGRICULTURAL SPRAYER, AND AGRICULTURAL SPRAYER**
AUSLEGERVORRICHTUNG UND VERFAHREN ZUM BETRIEB EINER AUSLEGERVORRICHTUNG EINER LANDWIRTSCHAFTLICHEN SPRITZE UND LANDWIRTSCHAFTLICHE SPRITZE
APPAREIL À FLÈCHE ET PROCÉDÉ DE FONCTIONNEMENT D'UN APPAREIL À FLÈCHE D'UN PULVÉRISATEUR AGRICOLE, ET PULVÉRISATEUR AGRICOLE

(43) Date of publication of application: 13.03.2024
(73) Proprietor: Kverneland Group Nieuw-Vennep B.V., 2153 LR Nieuw-Vennep (NL)
(72) Inventor: KONIJN, Theodorus Ludovicus Simon, 2153 LR Nieuw-Venner (NL); VAN DER KROGT, René, 2153 LR Nieuw-Venner (NL)
(74) Representative: Bittner, Thomas L.

(56) References cited:
- EP-A1- 3 363 287
- US-A- 5 887 390
- US-A1- 2022 264 859

## Description

The present disclosure refers to a boom apparatus and a method for operating a boom apparatus for an agricultural sprayer, and an agricultural sprayer.

### Background

Such technology is applied for agricultural sprayers used for dispensing a product such as a spraying material by means of a plurality of sprayer elements received on a boom of the agricultural sprayer, the boom being extendable and retractable. Sections of the boom may be folded and unfolded to provide at least an extended working position and a folded transport position. Thereby, for example, the boom of the agricultural sprayer can be brought into an extended orientation for the operation of the agricultural sprayer on the field, wherein the extended orientation is essentially orientated transversely to a driving direction while the agricultural sprayer is moving on the field. The folded orientation of the boom sections which may be essentially along the driving direction may be chosen if the agricultural sprayer is moving on a street or road. Also, by folding and unfolding boom sections a working width of the agricultural sprayer may be adjusted.

Document US 6,293,475 B1 discloses a folding boom for an agricultural sprayer. The boom includes a first piece pivotally connected to a second piece. The folding boom comprises a hydraulic cylinder for hydraulically pivoting the first boom piece relative to the second boom piece between a folded orientation and an extended orientation. The hydraulic cylinder includes a cylinder portion in which a piston structure is received. The cylinder portion and the piston structure are configured to slide axially relative to one another when the first boom piece is pivoted relative to the second boom piece. The folding boom further includes an accumulator in fluid communication with the cylinder portion for accumulating hydraulic fluid when the first boom piece collides with an obstruction and is pivoted from the extended orientation toward the folded orientation. A hydraulic control system is controlling the operation of the hydraulic cylinder in different modes of operation. The hydraulic control system is in an operation mode in which a pressure source configured to provide hydraulic pressure to the hydraulic cylinder is prevented from extending or retracting the hydraulic cylinder, thereby, preventing folding or unfolding of the boom. The operation mode is to be applied when the agricultural sprayer is dispensing the product in the field. In the operation mode a bypass flow line connecting ports of the cylinder portion on both sides of the piston head is open, thereby, allowing flow of a hydraulic fluid through the bypass flow line between the two ports. Therefore, in the operation mode the hydraulic control system is always in a break-away condition allowing flow of the hydraulic fluid through the open bypass flow line. The accumulator is connected to the bypass flow line. In the break-away condition the hydraulic fluid expelled from one of the chambers in the cylinder structure is flowing through the bypass flow line to both the other chamber in the cylinder structure and the accumulator, wherein the accumulator is receiving excess displaced hydraulic fluid. After the obstacle has been bypassed, the hydraulic fluid is pushed back by the hydraulic control system toward the chamber, wherein the hydraulic fluid stored within the accumulator also flows back toward the chamber from which it was expelled before.

Document US 2003 / 0154704 A1 refers to brush cutting technology including a breakaway system. A single horizontal pin attaches the cutter head of a brush cutting machine to the boom and a swing tower, so that a single vertical pin can attach the tractor to the boom, the vertical pin and swing tower allowing the cutter head to have a forward and aft movement for flexibility around immovable objects. A breakaway cylinder holds the cutter head at a ninety degree angle relative to the tractor of a brush cutting machine. A control, in the form of a joystick, remotely raises and lowers the cutter head portion using a single control within the cab. A first relief valve bypasses when higher than normal hydraulic pressure is created in the breakaway cylinder and a second relief valve removes excess oil from the breakaway cylinder. A switch, in the form of a toggle switch, remotely operates the breakaway cylinder and moves the cutter head from within the cab. A method for brush cutting with a brush cutting machine having a breakaway system is also disclosed.

Document US 6,119,963 discloses a boom assembly comprising a central support, a first wing pivotably coupled to the central support so as to rotate about a first axis, a first cylinder-piston assembly having a first end pivotably coupled to the support, a second end pivotably coupled to the first wing at a first pivot point for rotation about a second axis on a first side of the first axis, and a second cylinder-piston assembly having a first end pivotably coupled to the support and a second end pivotably coupled to the first wing at a second pivot point for rotation about a third axis on a second side of the first axis.

Document WO 2004 / 089077 A1 discloses an agricultural crop spraying apparatus comprising a spray boom consisting of a plurality of mutually hinged boom sections, latch means controlling folding of the boom sections, and sensing means disposed along the front edge of the boom to sense contact with an obstacle, the sensing means being coupled to the latch means to allow folding of the boom sections when an obstruction is sensed.

Document FR 2 891 110 A1 refers to an assembly for connecting boom sections.

Document EP 3 363 287 A1 refers to a boom apparatus for an agricultural sprayer, comprising a first boom section of a boom provided with a plurality of sprayer elements for dispensing a product; a second boom section of the boom, the second boom section foldably connected to the first boom section in such a way that the second boom section is pivotable between an extended position in which the second boom section is outwardly extending from the first boom section for forming an extended boom and a folded position in which the second boom section is folded from the extended position in a folding direction for forming a folded boom. A pressure relief apparatus is provided, comprising a pressure relief flow line connecting the first and second cylinder sub-chambers; and a pressure relief valve provided in the pressure relief flow line in such a way that, in the operation mode, the pressure relief flow line is in a normally blocked condition in which the pressure relief flow line is blocked by the pressure relief valve. The pressure relief flow line is in an open condition by the pressure relief valve opening if, because of the second boom section colliding with an obstruction and pivoting rearwardly from the extended position toward the folded position, a pressure in one of the first and second cylinder sub-chambers is exceeding a threshold pressure, thereby, allowing a hydraulic fluid flowing through the pressure relief fluid line directly from the one to the other of the first and second cylinder sub-chambers; and the pressure relief flow line is returning to the normally blocked condition by the pressure relief valve closing if the pressure is falling below the threshold pressure.

### Summary

It is an object to provide a boom apparatus and a method for operating a boom apparatus for an agricultural sprayer, and an agricultural sprayer which allow for improved and more safe operation of the boom apparatus.

For solving the problem a boom apparatus and a method for operating a boom apparatus for an agricultural sprayer according to the independent claims 1 and 15, respectively, are provided. Further, an agricultural sprayer according to claim 14 is provided. Additional aspects are disclosed in dependent claims.

According to an aspect, a boom apparatus for an agricultural sprayer is provided, comprising: a boom provided with a plurality of sprayer elements for dispensing a spraying material; a central boom section of the boom; a first boom section of the boom, wherein the first boom section is foldably connected to the central boom section in such a way that the first boom section is pivotable between an extended working position in which the first boom section is outwardly extending from the central boom section and a folded transport position in which the first boom section is folded for transportation; a first actuation device for pivoting the first boom section between the folded transport position and the extended working position; a second boom section of the boom, the second boom section being foldably connected to the first boom section in such a way that the second boom section is pivotable between an extended working position in which the second boom section is outwardly extending from the first boom section and a transport position in which the second boom section is folded for transportation; a second actuation device for pivoting the second boom section between the folded transport position and the extended working position.

The second actuation device comprises a hydraulic actuation device having a hydraulic cylinder comprising: a cylinder portion connected to one of the first and second boom sections; and a piston structure connected to the other of the first and second boom sections, the piston structure having a piston head connected to a piston rod, and the cylinder portion defining a first cylinder sub-chamber located on a first side of the piston head and a second cylinder sub-chamber located on a second side of the piston head, wherein the piston rod is extending in the first cylinder sub-chamber. Further, the hydraulic cylinder is provided with the following: a driving source for operating the hydraulic cylinder for pivoting the second boom section between the folded transport position and the extended working position by supplying hydraulic fluid to the hydraulic cylinder through a supply line and discharging hydraulic fluid from the hydraulic cylinder through a discharging line, thereby, causing the hydraulic cylinder to extend or retract; and a pressure relief safety valve provided in a hydraulic safety line connecting the second cylinder sub-chamber to the discharging line.

The boom apparatus is configured to: pivot the first boom section from the folded transport position to the extended working position while the second boom section is still in the folded transport position with respect to the first boom section; when pivoting the first boom section towards the extended working position, push the second boom section and / or a boom component assigned to the second section against the central boom section and / or a boom component assigned to the central section, thereby, increasing a chamber pressure for hydraulic fluid in the second cylinder sub-chamber; open the pressure relief safety valve for allowing hydraulic fluid flowing from the second cylinder sub-chamber back to the discharging line, if the chamber pressure for the hydraulic fluid in the second cylinder sub-chamber reaches a threshold pressure value, thereby, reducing the chamber pressure for hydraulic fluid in the second cylinder sub-chamber; and in response to reducing the chamber pressure for hydraulic fluid in the second cylinder sub-chamber, move the second boom section out of the folded transport position into a first extended position different from the extended working position and located in the vicinity of the folded transport position.

According to another aspect, a method for operating such boom apparatus is provided, the method comprising: pivoting the first boom section from the folded transport position to the extended working position while the second boom section is still in the folded transport position with respect to the first boom section; when the first boom section is pivoted towards the extended working position, pushing the second boom section and / or a boom component assigned to the second section against the central boom section and / or a boom component assigned to the central section, thereby, increasing a chamber pressure for hydraulic fluid in the second cylinder sub-chamber; opening the pressure relief safety valve for allowing hydraulic fluid flowing from the second cylinder sub-chamber back to the discharging line, if the chamber pressure for the hydraulic fluid in the second cylinder sub-chamber reaches a threshold pressure value, thereby, reducing the chamber pressure for hydraulic fluid in the second cylinder sub-chamber; and in response to reducing the chamber pressure for hydraulic fluid in the second cylinder sub-chamber, moving the second boom section out of the folded transport position into a first extended position located in the vicinity of the folded transport position.

Further, an agricultural sprayer comprising the boom apparatus is provided.

The technology proposed allows for safer and more efficient operation of the boom apparatus, especially in the process of unfolding boom sections from the folded transport position for extending the boom. If, for example, the boom is to be operated by only using a limited working width of the boom, i.e. not full working width available, the first boom section pivotably connected to the central or middle boom section can be safely moved from the folded transport position to the unfolded working position with the second boom section still kept in the folded transport position relative to the first boom section. Thereby, the boom can be extended or unfolded to a working width smaller than total working width available for the boom which is present if not only the first boom section, but also the second boom section is unfolded to the unfolded working position. However, there may be operation conditions on the field which require to limit the working width of the boom. In such situation, for example, when entering the field, from the plurality of boom sections only the first boom section is to be pivoted into the unfolded working position, but not the second boom section (and optionally some additional boom section which may be foldably linked to the second boom section).

By means of the safety mechanism proposed it is avoided that the second boom section being in the folded transport position causes damage to any boom component assigned to or located in the central section of the boom. If the second boom section is pushed against some boom component in the central section, the safety mechanism causes the second boom section to open or unfold to some extent, thereby, avoiding damage to the boom component assigned to the central section. The boom component, for example, can be a frame member of the central boom section. Alternatively or in addition, it can be some functional component assigned to the central section such as a box or a cabinet receiving, for example, a control device applied for operating the boom such as operating boom sections for folding or unfolding. The "somewhat" unfolded position of the second boom section in relation to the first boom section being in the unfolded transport position is different from both the folded transport position and the unfolded working position of the second boom section and may also be referred to as unfolded non-working position.

The discharging line connected to the second sub-chamber through the pressure relieve safety valve may be a hydraulic line of low pressure connected to a tank or reservoir for the hydraulic fluid. The low pressure allows for discharging hydraulic fluid from the second cylinder sub-chamber in case of the chamber pressure reaching the threshold pressure value.

The first and second boom section may be of equal or different boom section length.

At least one of the boom component assigned to the central section and the boom component assigned to the second section may comprise a protection device configured to protect, at least from collision with the second boom section, the central boom section. The protection device, for example, may be located on the central or middle boom section and / or in the vicinity of the central boom section. It may be provided, for example, with a protection member orientated, for example, essentially horizontally or vertically.

The protection device may comprise a roller device, the roller device rolling on the second boom section while the second boom section is pushed against the protection device. The roller device supports avoiding unwanted friction between the protection device and the second boom section being pushed against the protection device. Thus, the risk for damage to a member of the second boom section is minimized.

The protection device may be located on a frame member of a boom frame of the boom. The protection device, in this and other embodiments, may be extending in at least one of vertical direction and horizontal direction.

The protection device may be configured to protect a functional component assigned to operation of the boom such as a control device for controlling operation of one or more hydraulic actuation devices applied for pivoting one or more boom sections and / or lifting and lowering the boom with respect to ground level.

The functional component may comprise at least one of the following: an actuation control device configured to control operation of at least one of the first actuation device, and the second actuation; a dispensing control device configured to control operation of dispensing the spraying material through the plurality of dispensing devices; and a cabinet configured to receive one or more device assigned to operation of the boom such as at least one of the first actuation device, the actuation control device, and the dispensing control device. The protection device may be configured to protect one or all of such devices from damage because of being hit by the second boom section while the first boom section is moved into the unfolded working position.

The boom apparatus may be further configured to dispense the spraying material through first sprayer elements on the first boom section from the plurality of sprayer elements, while the first boom section is in the extended working position and the second boom section is in the first extended position. In this embodiment the boom is provided with limited working width by having the first boom section in the extended working position, but not the second boom section which is still in the vicinity or close to its folded transport position with respect or relatively to the first boom section. Second sprayer elements provided on the second boom section may be prevented from dispensing the spraying material. In a later stage of operation of the agricultural sprayer on the field, the second boom section may be pivoted to the unfolded working position, thereby, extending the working width of the agricultural sprayer on one or both opposite sides of the agricultural sprayer.

The first actuation device may comprise a further hydraulic actuation device.

The boom apparatus may further comprise a boom support, wherein the boom apparatus is further configured for a lifting process for lifting the boom from the boom support while both the first and the second boom section are in the folded transport position. The boom may be in a secured position when resting on the boom support for transportation. By means of the lifting process the boom is moved out of such secured position to allow unfolding of the boom sections.

The first boom section and the second boom section which may be extending essentially along a driving direction in the folded transport position, wherein the driving direction is transversely orientated to an extension of the first boom section and the second boom section when being in the extended working position. Thus, the first boom section and the second boom section are extending essentially transversely to the driving direction when being placed in the extended working position.

The first boom section and the second boom section may be in an essential parallel orientation when both the first boom section and the second boom section are in the folded transport position.

The boom apparatus may be further configured to move the second boom section from the extended working position to the first extended position while the first boom section is in the extended working position. Thus, the working width provided for the boom apparatus can flexibly be adjusted by separately unfolding the first and second boom section, respectively to the unfolded working position.

The boom apparatus may comprise the following: a detection device configured to detect folding signals at least indicative of the first boom section being in the folded transport position; and a control device functionally connected to the detection device and the second actuation device, and configured to provide, in response to the folding signals, control signals to the second actuation device for pivoting the second boom section to the folded transport position. The detection device may comprise a sensor device such as an angle sensor assigned to the first boom section and configured to detect one or more positions for the first boom section. The control device may be implemented with, for example, one or more processors configured to generate the control signals in response to processing the folding signals received from the detection device.

With respect to the detection device, in addition or alternatively it may comprise at least one of a proximity sensor and a position sensor. The proximity sensor can be mounted in a position configured to detect a boom section, for example, on the first boom section, detecting the machine. Or it could be implemented near or in the actuation device folding the first boom section. The position sensor, for example, may be implemented near or in the actuation device folding the first boom section. The sensor may be providing information about the length and / or the position of a moving element of the actuation device.

The embodiments disclosed above for the boom apparatus can be applied to at least one of the agricultural sprayer and the method for operating the boom apparatus *mutatis mutandis.*

### Description of further embodiments

Following, further embodiments are described by referring to figures. In the figures, show:
- Fig. 1: a schematic representation of an agricultural machine comprising a tractor and an agricultural sprayer hooked to the tractor, wherein boom sections of a boom of the agricultural sprayer are in a folded transport position;
- Fig. 2: a schematic representation of the agricultural machine of Fig. 1 with the boom in a partially extended or unfolded position;
- Fig. 3: the agricultural machine of Fig. 1 with first boom sections in an unfolded working position, but second boom sections still in a folded transport position;
- Fig. 4: a schematic representation of the agricultural machine of Fig. 1 with the first boom sections in the unfolded position and the second boom sections in a partially unfolded working position;
- Fig. 5: a schematic representation of the agricultural machine of Fig. 1 with all boom in the unfolded working position;
- Fig. 6: a schematic representation of the agricultural machine of Fig. 1 with the boom sections provided similar to Fig. 4;
- Fig. 7: a schematic representation of the agricultural machine of Fig. 1 with first boom sections in folded transport position and second boom sections in partially unfolded position;
- Fig. 8: the agricultural machine of Fig. 1 with the boom in the folded transport position similar to Fig. 1;
- Fig. 9: a schematic representation of details of central section of the boom provided with a protection device; and
- Fig. 10: a schematic representation of functional components of a boom apparatus for an agricultural sprayer.

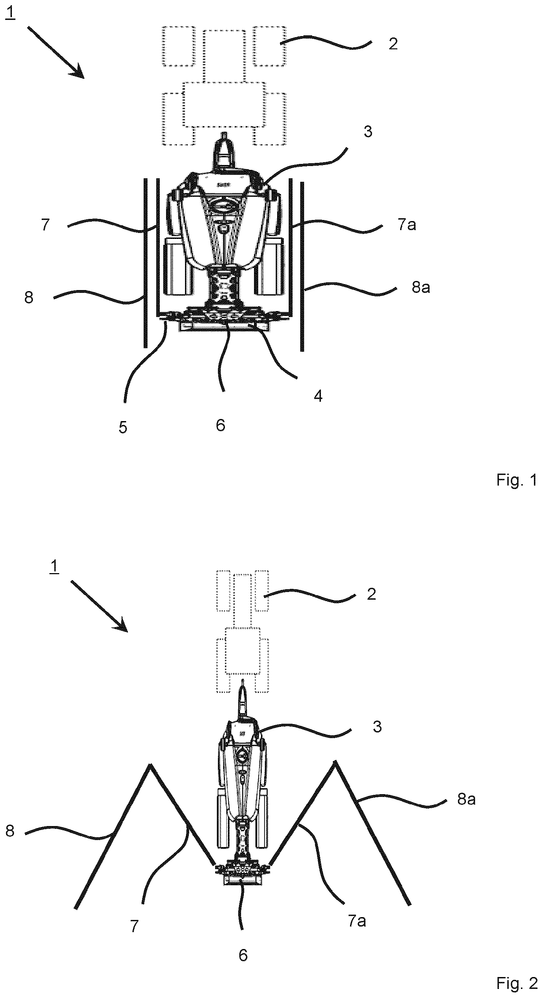

Fig. 1 to Fig. 8 show schematic representations of an agricultural machine 1 comprising a tractor 2 and an agricultural sprayer 3 hooked to the tractor (trailed agricultural sprayer 3 connected to the tractor 2). In an alternative embodiment, the agricultural sprayer 3 may be provided as a self-driving machine without need for the tractor 2. Further, functional components of the agricultural sprayer 3 could be carried by the tractor 2 in an embodiment.

The agricultural sprayer 3 comprises a boom apparatus 4 having a boom 5 on which spraying elements are provided for dispensing a product such as a spraying material for agricultural purpose. The boom 5 is having a central or middle boom section 6, a first boom section 7 foldably connected to the central boom section 5 and a second boom section 8. According to the example shown, an additional first boom section 7a and an additional second boom section 8a are provided on an opposite side of the central boom section 6 similar to the first and second boom sections 7, 8.

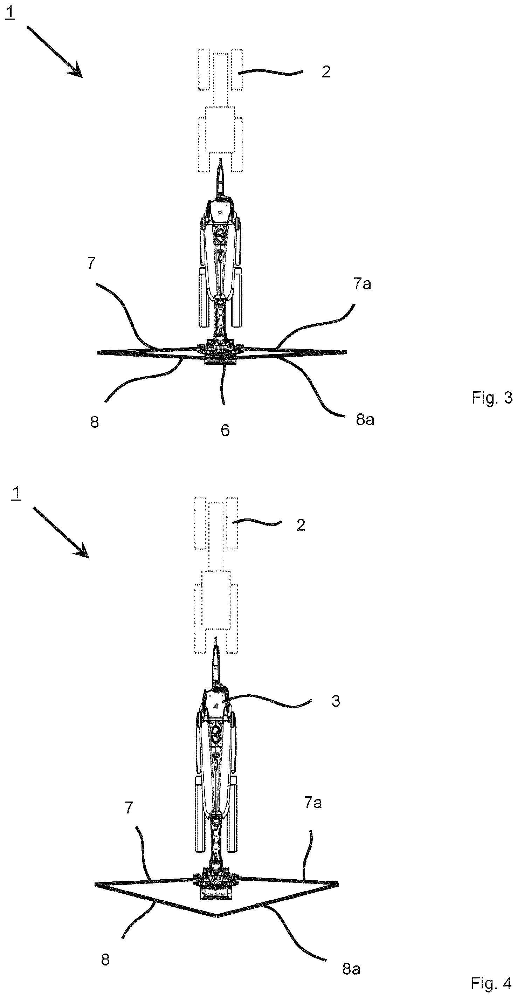

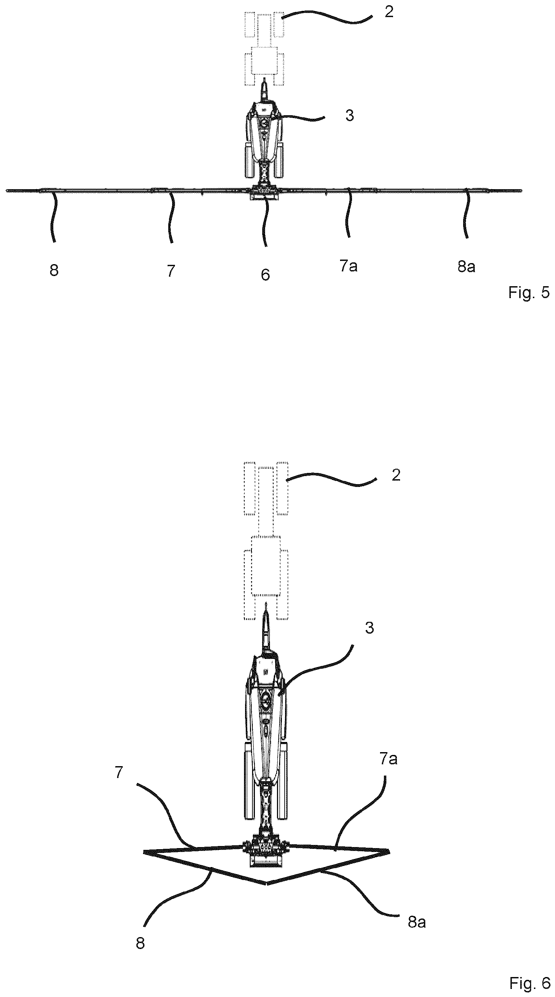

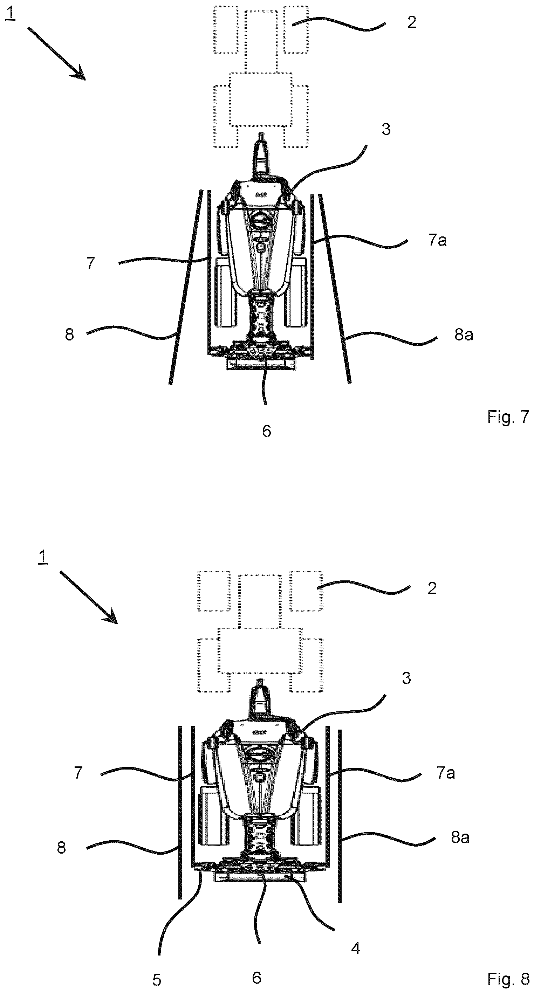

For establishing a full working width for the agricultural machine 3, the boom 5 may be unfolded completely as it is shown in Fig. 5, the first and second boom section 7, 8 as well as the additional first and second boom section 7a, 8a being in an unfolded working position and extending outwardly in a direction transversely to a driving direction of the agricultural machine 1. A smaller working width is provided according to Fig. 4 and 6 with only the first boom section 7 and the additional first boom section 7a in the unfolded working position, but the second boom section 8 and the additional second boom section 8a being still in a folded position with respect to the first / first additional boom section 7, 7a, such folded position, in relation to the first / first additional boom section 7, 7a, being different from the folded transport position (see Fig. 1 and 8).

According to Fig. 1 and 8 which show an arrangement of boom sections before unfolding and after folding (back), respectively, the first boom section 7 and the second boom section 8 on one side of the agricultural sprayer 3 and the second boom section 8 and the additional second boom section 8a on the opposite side of the agricultural sprayer 3 are in an essentially parallel orientation to each other in the folded transport position. In case of having the first boom section 7 and the additional first boom section 7a in the unfolded working position, but not the second boom section 8 and the additional second boom 8a (see Fig. 4 and 6), such parallel orientation is no longer the case, since the second boom section 8 and the additional second boom section 8a are moved out of the folded transport position relative to the first / first additional boom section 7, 7a. Relative positioning between the first boom section 7 and the first additional boom section 7a and the second boom section 8 and the second additional boom section 8a as shown in Fig. 4 is the result of unfolding to some extent the first / first additional boom section 7, 7a relative to the second / second additional boom section 8, 8a in the process of unfolding the first / first additional boom section 7, 7a from the folded transport position to the unfolded working position (see Fig. 3 and 4). The arrangement of the boom sections shown in Fig. 4 may also be referred to as a working position with limited working width. An at least similar arrangement may be provided for the boom sections with limited working width (see Fig. 6) when the boom sections are partially folded from unfolded working position in Fig. 5.

Such "forced" unfolding of the second / second additional boom section 8, 8a as shown in Fig. 4 is not present in a case of some alternative unfolding process shown schematically in Fig. 2. Fig. 4 In such unfolding process both the first / first additional boom section 7, 7a and the second / second additional boom section 8, 8a are unfolded simultaneously while extending the boom 4 from the folded transport position as shown in Fig. 1 to the unfolded working position as shown in Fig. 5.

However, if the first / first additional boom section 7, 7a is unfolded to the unfolded working position as shown in Fig. 3, the second / second additional boom section 8, 8a is likely to be pushed against the central boom section 6 which could cause damage to any element, component or member provided in or assigned to the central boom section 6. Having the second / second additional boom section 8, 8a forcibly moved out of the folded transport position relative to the first / first additional boom section 7, 7a as shown in Fig. 4 will avoid such potential damage.

Fig. 7 is showing an arrangement of boom sections after folding the second / second additional boom section 8, 8a from an extended working position to a partially folded working position and then folding the first / first additional boom section 7, 7a to the folded transport position. After this, a folding operation may be conducted automatically that makes the second / second additional boom section 8, 8a fold to the (fully) folded transport position as shown in Fig. 1.

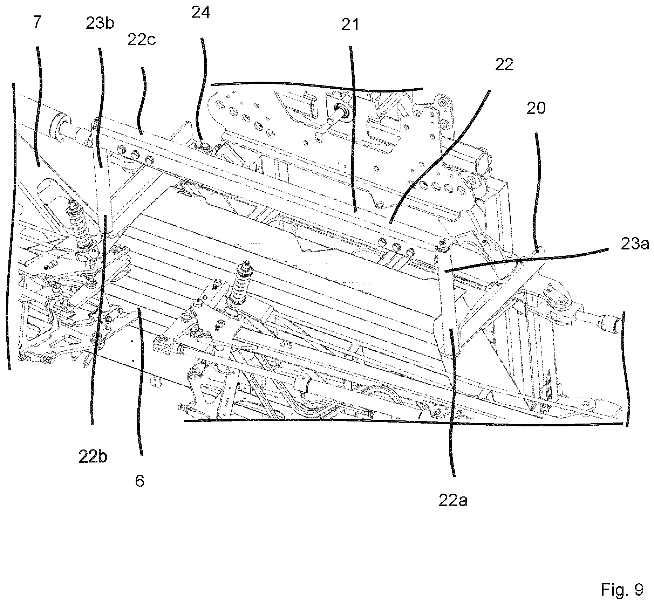

Fig. 9 shows a schematic representation of details of the central boom section 6. A protection device 20 is provided. The protection device 20 comprises a protection element 21 provided with protection frame elements 22. On vertically extending protection frame elements 22a, 22b roller elements 23a, 23b are provided. The vertically extending protection frame elements 22a, 22b are connected by a horizontally extending protection frame element 22c. The protection device 20 is preventing the second / second additional boom section 8, 8a from entering a protected space 24 receiving one or more boom components located on or provided with the central boom section 6. If the first / first additional boom section 7, 7a is moved from the folded transport position into the unfolded working position, the second / second additional boom section 8, 8a is pushed against the protection device 20, thereby, unfolding the second / second additional boom section 8, 8a to some minor extent to still a non-working position.

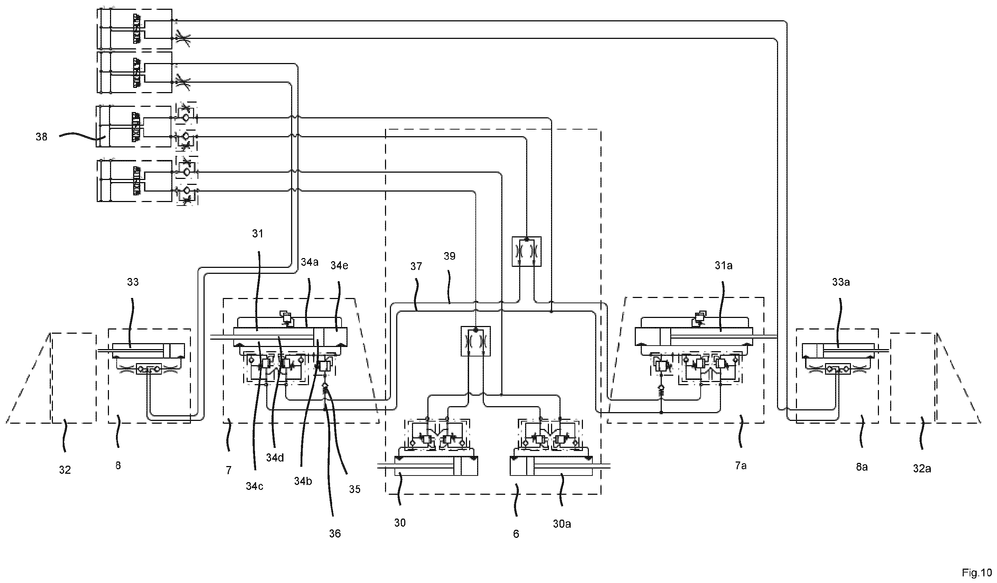

Fig. 10 shows a schematic representation of functional operation components for operating the boom apparatus 4 provided with the plurality of boom sections. For the same features in Fig. 10 the reference numerals as disclosed in Fig. 1 to 9 are assigned.

The first boom section 7 and the first additional boom section 7a are assigned a first actuation device 30 and a first additional actuation device 30a, respectively, for pivoting the respective boom section between the folded transport position and the unfolded working position. Similarly, the second boom section 8 and the second additional boom section 8a is assigned a second actuation device 31 and an additional second actuation device 31a, respectively, configured to move the respective boom section between the folded transport position and the unfolded working position. According to the example shown, the different actuation devices are each provided with an hydraulic actuation device comprising a hydraulic cylinder and a hydraulic drive source for retracting and extracting as it is known as such.

In the embodiment shown in Fig. 10, there are further boom sections 32, 32a which may be referred to as outer boom sections. The further boom section 32, 32a operable to further extend the working width of the boom 4 are assigned further actuation devices 33, 33a for pivoting the further boom sections 32, 32a between the folded transport position and the unfolded working position.

The second actuation device 31 is provided with a hydraulic actuation device 34 comprising a hydraulic cylinder 34a having a piston 34b dividing the hydraulic cylinder into a first sub-chamber 34c in which a piston rod 34d is extending and a second sub-chamber 34e also referred to as bottom of the hydraulic cylinder 34a. The other actuation devices may be implemented with similar hydraulic design as shown in Fig. 10.

With respect to the second actuation device 31 assigned to the second boom section 8, a pressure relief safety valve 35 is provided in a safety line 36 connecting the second cylinder sub-chamber 34e with a discharging line 37.

The movement of the second boom section 8 is driven by a hydraulic mechanism provided with the second actuation device 31 having the hydraulic actuation device 34. A driving or pressure source 38 such as a hydraulic pump provides hydraulic pressure for operating the hydraulic cylinder 34a. The driving source 38 and, optionally, further functional components are controlled by a hydraulic control system (not shown). Such additional functional components, for example, may be one or more hydraulic valves. The hydraulic cylinder 34a is connected to the hydraulic control system by a first and a second control flow line each allowing the flow of a hydraulic fluid at least into the hydraulic cylinder 34a, such first and second control flow lines providing for a charging line 39 and the discharging line 37 connected to the first and second sub-chamber 34c, 34e, respectively.

For operating the hydraulic cylinder 34a in an unfold mode in which the hydraulic pressure from the driving source 38 causes the hydraulic cylinder 34a to pivot the second boom section 8 from the folded position to the extended working position and in a fold mode in which the hydraulic pressure from the driving source 38 causes the hydraulic cylinder 34a to pivot the second boom section 8 from the extended working position to the folded transport position, under the control of the hydraulic control system, hydraulic fluid is provided through the first and / or the second control flow line to the first and / or second cylinder sub-chamber 34c, 34e in the hydraulic cylinder 34a.

The technology proposed allows for safer and more efficient operation of the boom apparatus 4 in the process of unfolding boom sections from the folded transport position for extending the boom. If, the boom 5 is to be operated by only using a limited working width of the boom 5, i.e. not full working width used, the first boom section 7 pivotably connected to the central or middle boom section 6 can be safely moved from the folded transport position to the unfolded working position with the second boom section 8 still kept in the folded transport position relative to the first boom section 7. Thereby, the boom 5 can be extended or unfolded to a working width smaller than total working width available for the boom 5 which is present if not only the first boom section 7, but also the second boom 8 section is unfolded to the unfolded working position.

By means of the safety mechanism comprising the pressure relief safety valve 35 provided in the safety line 36 it is avoided that the second boom section 8 being in the folded transport position causes damage to any boom component assigned to or located in the central boom section 6. If the second boom section 8 is pushed against some boom component in the central boom section 6, the safety mechanism causes the second boom section 8 to open or unfold to some extent, thereby, avoiding damage to the boom component assigned to the central section 6. Such pushing of the second boom section 8 against the central boom section 6 causes an increase of chamber pressure in the second sub-chamber 34e. In response the pressure relief safety valve 35 will open the safety line 36, thereby, allowing hydraulic fluid to flow back into the (low pressure) discharging line 37. This will reduce chamber pressure and allow the second boom section 8 to unfold to a position different from the folded transport position. But, such somewhat unfolded position is still different from the actual unfolded working position and may also be referred to an unfolded non-working position (see Fig. 4 and 6).

The aspects outlined above apply to operation of the first additional boom section 7a and the second additional boom section 8a by means of the second additional actuation device 31a *mutatis mutandis.*

## Claims

1. A boom apparatus (4) for an agricultural sprayer, comprising
- a boom provided with a plurality of sprayer elements for dispensing a spraying material;
- a central boom section (6) of the boom:
- a first boom section (7) of the boom, wherein the first boom section is foldably connected to the central boom section in such a way that the first boom section is pivotable between an extended working position in which the first boom section is outwardly extending from the central boom section and a folded transport position in which the first boom section is folded for transportation;
- a first actuation device (30) for pivoting the first boom section between the folded transport position and the extended working position;
- a second boom section (8) of the boom, the second boom section being foldably connected to the first boom section in such a way that the second boom section is pivotable between an extended working position in which the second boom section is outwardly extending from the first boom section and a transport position in which the second boom section is folded for transportation; and
- a second actuation device (31) for pivoting the second boom section between the folded transport position and the extended working position, wherein the second actuation device comprises a hydraulic actuation device having
- a hydraulic cylinder (34a) comprising
- a cylinder portion connected to one of the first and second boom sections; and
- a piston structure connected to the other of the first and second boom sections, the piston structure having a piston head (34b) connected to a piston rod (34d), and the cylinder portion defining a first cylinder sub-chamber (34c) located on a first side of the piston head and a second cylinder sub-chamber (34e) located on a second side of the piston head, wherein the piston rod is extending in the first cylinder sub-chamber; and
- a driving source (38) for operating the hydraulic cylinder for pivoting the second boom section between the folded transport position and the extended working position by supplying hydraulic fluid to the hydraulic cylinder through a supply line (39) and discharging hydraulic fluid from the hydraulic cylinder through a discharging line (37), thereby, causing the hydraulic cylinder to extend or retract; and
- a pressure relief safety valve (35) provided in a hydraulic safety line (36); wherein the boom apparatus is configured to
- pivot the first boom section from the folded transport position to the extended working position while the second boom section is still in the folded transport position with respect to the first boom section;
**characterized in that**
the hydraulic safety line connecting the second cylinder sub-chamber to the discharging line;
the boom apparatus is further **characterized in that** it is further configured to
- when pivoting the first boom section towards the extended working position, push the second boom section and / or a boom component assigned to the second section against the central boom section and / or a boom component assigned to the central section, thereby, increasing a chamber pressure for hydraulic fluid in the second cylinder sub-chamber;
- open the pressure relief safety valve for allowing hydraulic fluid flowing from the second cylinder sub-chamber back to the discharging line, if the chamber pressure for the hydraulic fluid in the second cylinder sub-chamber reaches a threshold pressure value, thereby, reducing the chamber pressure for hydraulic fluid in the second cylinder sub-chamber; and
- in response to reducing the chamber pressure for hydraulic fluid in the second cylinder sub-chamber, move the second boom section out of the folded transport position into a first extended position different from the extended working position and located in the vicinity of the folded transport position.

2. Boom apparatus of claim 1, wherein at least one of the boom component assigned to the central section and the boom component assigned to the second section comprises a protection device configured to protect, at least from collision with the second boom section, the central boom section.

3. Boom apparatus of claim 2, wherein the protection device comprises a roller device, the roller device rolling on the second boom section while the second boom section is pushed against the protection device.

4. Boom apparatus of claim 2 or 3, wherein the protection device is located on a frame member of a boom frame of the boom.

5. Boom apparatus of at least one of claims 2 to 4, wherein the protection device is configured to protect a functional component assigned to operation of the boom.

6. Boom apparatus of claim 5, wherein the functional component comprises at least one of
- an actuation control device configured to control operation of at least one of the first actuation device, and the second actuation;
- a dispensing control device configured to control operation of dispensing the spraying material through the plurality of dispensing devices; and
- a cabinet configured to receive one or more device assigned to operation of the boom such as at least one of the first actuation device, the actuation control device, and the dispensing control device.

7. Boom apparatus of at least one of the preceding claims, further configured to dispense the spraying material through first sprayer elements on the first boom section from the plurality of sprayer elements, while the first boom section is in the extended working position and the second boom section is in the first extended position.

8. Boom apparatus of at least one of the preceding claims, wherein the first actuation device comprises a further hydraulic actuation device.

9. Boom apparatus of at least one of the preceding claims, further comprising a boom support, wherein the boom apparatus is further configured for a lifting process for lifting the boom from the boom support while both the first and the second boom section are in the folded transport position.

10. Boom apparatus of at least one of the preceding claims, wherein the first boom section and the second boom section are extending essentially along a driving direction in the folded transport position, the driving direction being transversely orientated to an extension of the first boom section and the second boom section when being in the extended working position.

11. Boom apparatus of at least one of the preceding claims, wherein the first boom section and the second boom section are in an essential parallel orientation when both the first boom section and the second boom section are in the folded transport position.

12. Boom apparatus of at least one of the preceding claims, further configured to move the second boom section from the extended working position to the first extended position while the first boom section is in the extended working position.

13. Boom apparatus of at least one of the preceding claims, comprising
- a detection device configured to detect folding signals at least indicative of the first boom section being in the folded transport position; and
- a control device functionally connected to the detection device and the second actuation device, and configured to provide, in response to the folding signals, control signals to the second actuation device for pivoting the second boom section to the folded transport position.

14. An agricultural sprayer, comprising the boom apparatus of at least one of the preceding claims.

15. A method for operating a boom apparatus of an agricultural sprayer according to at least one of the claims 1 to 13, comprising
- pivoting the first boom section from the folded transport position to the extended working position while the second boom section is still in the folded transport position with respect to the first boom section;
**characterized in that**
- when the first boom section is pivoted towards the extended working position, pushing the second boom section and / or a boom component assigned to the second section against the central boom section and / or a boom component assigned to the central section, thereby, increasing a chamber pressure for hydraulic fluid in the second cylinder sub-chamber;
- opening the pressure relief safety valve for allowing hydraulic fluid flowing from the second cylinder sub-chamber back to the discharging line, if the chamber pressure for the hydraulic fluid in the second cylinder sub-chamber reaches a threshold pressure value, thereby, reducing the chamber pressure for hydraulic fluid in the second cylinder sub-chamber; and
- in response to reducing the chamber pressure for hydraulic fluid in the second cylinder sub-chamber, moving the second boom section out of the folded transport position into a first extended position located in the vicinity of the folded transport position.

## Patentansprüche

1. Auslegervorrichtung (4) für eine landwirtschaftliche Spritze, umfassend
- einen Ausleger (5), der mit einer Vielzahl von Spritzelementen zum Abgeben eines Spritzmaterials versehen ist;
- einen mittleren Auslegerabschnitt (6) des Auslegers;
- einen ersten Auslegerabschnitt (7) des Auslegers, wobei der erste Auslegerabschnitt derart faltbar mit dem mittleren Auslegerabschnitt verbunden ist, dass der erste Auslegerabschnitt zwischen einer ausgefahrenen Arbeitsposition, in der sich der erste Auslegerabschnitt von dem mittleren Auslegerabschnitt nach außen erstreckt, und einer gefalteten Transportposition, in der der erste Auslegerabschnitt zum Tragen gefaltet ist, schwenkbar ist;
- eine erste Betätigungseinrichtung (30) zum Schwenken des ersten Auslegerabschnitts zwischen der gefalteten Transportposition und der ausgefahrenen Arbeitsposition;
- einen zweiten Auslegerabschnitt (8) des Auslegers, wobei der zweite Auslegerabschnitt derart faltbar mit dem ersten Auslegerabschnitt verbunden ist, dass der zweite Auslegerabschnitt zwischen einer ausgefahrenen Arbeitsposition, in der sich der zweite Auslegerabschnitt von dem ersten Auslegerabschnitt nach außen erstreckt, und einer Transportposition, in der der zweite Auslegerabschnitt zum Tragen gefaltet ist, schwenkbar ist; und
- eine zweite Betätigungseinrichtung (31) zum Schwenken des zweiten Auslegerabschnitts zwischen der gefalteten Transportposition und der ausgefahrenen Arbeitsposition, wobei die zweite Betätigungseinrichtung eine hydraulische Betätigungseinrichtung umfasst, mit
- einem Hydraulikzylinder (34a), umfassend
- einen Zylinderabschnitt, der mit einem von dem ersten und dem zweiten Auslegerabschnitt verbunden ist; und
- eine Kolbenstruktur, die mit dem anderen von dem ersten und dem zweiten Auslegerabschnitt verbunden ist, wobei die Kolbenstruktur einen Kolbenkopf (34b) aufweist, der mit einer Kolbenstange (34d) verbunden ist, und wobei der Zylinderabschnitt eine erste Zylinderunterkammer (34c), die sich auf einer ersten Seite des Kolbenkopfs befindet, und eine zweite Zylinderunterkammer (34e), die sich auf einer zweiten Seite des Kolbenkopfs befindet, definiert, wobei sich die Kolbenstange in der ersten Zylinderunterkammer erstreckt; und
- eine Antriebsquelle (38) zum Betreiben des Hydraulikzylinders zum Schwenken des zweiten Auslegerabschnitts zwischen der gefalteten Transportposition und der ausgefahrenen Arbeitsposition durch Zuführen von Hydraulikflüssigkeit zu dem Hydraulikzylinder durch eine Zuführleitung (39) und Ablassen von Hydraulikflüssigkeit aus dem Hydraulikzylinder durch eine Ablassleitung (37), wodurch bewirkt wird, dass der Hydraulikzylinder ausgefahren oder eingefahren wird; und
- ein Druckentlastungssicherheitsventil (35), das in einer Hydrauliksicherheitsleitung (36) vorgesehen ist;
wobei die Auslegervorrichtung eingerichtet ist,
- den ersten Auslegerabschnitts aus der gefalteten Transportposition in die ausgefahrene Arbeitsposition zu schwenken, während sich der zweite Auslegerabschnitt noch in der gefalteten Transportposition in Bezug auf den ersten Auslegerabschnitt befindet;
**dadurch gekennzeichnet, dass** die Hydrauliksicherheitsleitung die zweite Zylinderunterkammer mit der Ablassleitung verbindet;
die Auslegervorrichtung ist ferner **dadurch gekennzeichnet, dass** sie ferner eingerichtet ist,
- beim Schwenken des ersten Auslegerabschnitts in Richtung der ausgefahrenen Arbeitsposition den zweiten Auslegerabschnitt und/oder eine Auslegerkomponente, die dem zweiten Abschnitt zugeordnet ist, gegen den mittleren Auslegerabschnitt und/oder eine Auslegerkomponente, die dem mittleren Abschnitt zugeordnet ist, zu drücken, wodurch ein Kammerdruck für Hydraulikflüssigkeit in der zweiten Zylinderunterkammer erhöht wird;
- das Druckentlastungssicherheitsventil zu öffnen, um zu ermöglichen, dass Hydraulikflüssigkeit von der zweiten Zylinderunterkammer zurück zu der Ablassleitung fließt, wenn der Kammerdruck für die Hydraulikflüssigkeit in der zweiten Zylinderunterkammer einen Schwellendruckwert erreicht, wodurch der Kammerdruck für Hydraulikflüssigkeit in der zweiten Zylinderunterkammer verringert wird; und
- als Reaktion auf das Verringern des Kammerdrucks für Hydraulikflüssigkeit in der zweiten Zylinderunterkammer den zweiten Auslegerabschnitt aus der gefalteten Transportposition in eine erste ausgefahrene Position zu bewegen, die sich von der ausgefahrenen Arbeitsposition unterscheidet und sich in der Nähe der gefalteten Transportposition befindet.

2. Auslegervorrichtung nach Anspruch 1, wobei mindestens eine der Auslegerkomponente, die dem mittleren Abschnitt zugeordnet ist, und der Auslegerkomponente, die dem zweiten Abschnitt zugeordnet ist, eine Schutzvorrichtung umfasst, die eingerichtet ist, den mittleren Auslegerabschnitt mindestens vor einer Kollision mit dem zweiten Auslegerabschnitt zu schützen.

3. Auslegervorrichtung nach Anspruch 2, wobei die Schutzvorrichtung eine Rollenvorrichtung umfasst, wobei die Rollenvorrichtung auf dem zweiten Auslegerabschnitt rollt, während der zweite Auslegerabschnitt gegen die Schutzvorrichtung gedrückt wird.

4. Auslegervorrichtung nach Anspruch 2 oder 3, wobei die Schutzvorrichtung an einem Rahmenelement eines Auslegerrahmens des Auslegers angeordnet ist.

5. Auslegervorrichtung nach mindestens einem der Ansprüche 2 bis 4, wobei die Schutzvorrichtung eingerichtet ist, eine Funktionskomponente zu schützen, die dem Betrieb des Auslegers zugeordnet ist.

6. Auslegervorrichtung nach Anspruch 5, wobei die Funktionskomponente mindestens eines umfasst von
- eine Betätigungssteuereinrichtung, die eingerichtet ist, den Betrieb von mindestens einer der ersten Betätigungseinrichtung und der zweiten Betätigungseinrichtung zu steuern;
- eine Abgabesteuereinrichtung, die eingerichtet ist, den Betrieb des Abgebens des Spritzmaterials durch die Vielzahl von Abgabeeinrichtungen zu steuern; und
- ein Gehäuse, das eingerichtet ist, eine oder mehrere Einrichtungen aufzunehmen, die dem Betrieb des Auslegers zugeordnet sind, wie beispielsweise mindestens eine der ersten Betätigungseinrichtung, der Betätigungssteuereinrichtung und der Abgabesteuereinrichtung.

7. Auslegervorrichtung nach mindestens einem der vorhergehenden Ansprüche, die ferner eingerichtet ist, das Spritzmaterial durch erste Spritzelemente auf dem ersten Auslegerabschnitt aus der Vielzahl von Spritzelementen abzugeben, während sich der erste Auslegerabschnitt in der ausgefahrenen Arbeitsposition befindet und sich der zweite Auslegerabschnitt in der ersten ausgefahrenen Position befindet.

8. Auslegervorrichtung nach mindestens einem der vorhergehenden Ansprüche, wobei die erste Betätigungseinrichtung eine weitere hydraulische Betätigungseinrichtung umfasst.

9. Auslegervorrichtung nach mindestens einem der vorhergehenden Ansprüche, die ferner eine Auslegerstütze umfasst, wobei die Auslegervorrichtung ferner für einen Hebevorgang zum Heben des Auslegers von der Auslegerstütze eingerichtet ist, während sich sowohl der erste als auch der zweite Auslegerabschnitt in der gefalteten Transportposition befinden.

10. Auslegervorrichtung nach mindestens einem der vorhergehenden Ansprüche, wobei sich der erste Auslegerabschnitt und der zweite Auslegerabschnitt in der gefalteten Transportposition im Wesentlichen entlang einer Antriebsrichtung erstrecken, wobei die Antriebsrichtung quer zu einer Verlängerung des ersten Auslegerabschnitts und des zweiten Auslegerabschnitts ausgerichtet ist, wenn sie sich in der ausgefahrenen Arbeitsposition befindet.

11. Auslegervorrichtung nach mindestens einem der vorhergehenden Ansprüche, wobei sich der erste Auslegerabschnitt und der zweite Auslegerabschnitt in einer im Wesentlichen parallelen Ausrichtung befinden, wenn sich sowohl der erste Auslegerabschnitt als auch der zweite Auslegerabschnitt in der gefalteten Transportposition befinden.

12. Auslegervorrichtung nach mindestens einem der vorhergehenden Ansprüche, die ferner eingerichtet ist, den zweiten Auslegerabschnitt von der ausgefahrenen Arbeitsposition in die erste ausgefahrene Position zu bewegen, während sich der erste Auslegerabschnitt in der ausgefahrenen Arbeitsposition befindet.

13. Auslegervorrichtung nach mindestens einem der vorhergehenden Ansprüche, umfassend
- eine Erfassungseinrichtung, die eingerichtet ist, Faltsignale zu erfassen, die mindestens anzeigen, dass sich der erste Auslegerabschnitt in der gefalteten Transportposition befindet; und
- eine Steuereinrichtung, die funktional mit der Erfassungseinrichtung und der zweiten Betätigungseinrichtung verbunden ist und eingerichtet ist, als Reaktion auf die Faltsignale Steuersignale an die zweite Betätigungseinrichtung zum Schwenken des zweiten Auslegerabschnitts in die gefaltete Transportposition bereitzustellen.

14. Landwirtschaftliche Spritze, umfassend die Auslegervorrichtung nach mindestens einem der vorhergehenden Ansprüche.

15. Verfahren zum Betreiben einer Auslegervorrichtung einer landwirtschaftlichen Spritze nach mindestens einem der Ansprüche 1 bis 13, umfassend
- Schwenken des ersten Auslegerabschnitts aus der gefalteten Transportposition in die ausgefahrene Arbeitsposition, während sich der zweite Auslegerabschnitt noch in der gefalteten Transportposition in Bezug auf den ersten Auslegerabschnitt befindet;
**dadurch gekennzeichnet, dass**
- wenn der erste Auslegerabschnitt in Richtung der ausgefahrenen Arbeitsposition geschwenkt wird, der zweite Auslegerabschnitt und/oder eine Auslegerkomponente, die dem zweiten Abschnitt zugeordnet ist, gegen den mittleren Auslegerabschnitt und/oder eine Auslegerkomponente, die dem mittleren Abschnitt zugeordnet ist, gedrückt wird, wodurch ein Kammerdruck für Hydraulikflüssigkeit in der zweiten Zylinderunterkammer erhöht wird;
- das Druckentlastungssicherheitsventil geöffnet wird, um zu ermöglichen, dass Hydraulikflüssigkeit von der zweiten Zylinderunterkammer zurück zu der Ablassleitung fließt, wenn der Kammerdruck für die Hydraulikflüssigkeit in der zweiten Zylinderunterkammer einen Schwellendruckwert erreicht, wodurch der Kammerdruck für Hydraulikflüssigkeit in der zweiten Zylinderunterkammer verringert wird; und
- als Reaktion auf das Verringern des Kammerdrucks für Hydraulikflüssigkeit in der zweiten Zylinderunterkammer der zweite Auslegerabschnitt aus der gefalteten Transportposition in eine erste ausgefahrene Position bewegt wird, die sich in der Nähe der gefalteten Transportposition befindet.

## Revendications

1. Appareil à flèche (4) pour pulvérisateur agricole, comprenant
- une flèche (5) munie d'une pluralité d'éléments pulvérisateurs pour la distribution d'un produit pulvérisé ;
- une section centrale de flèche (6) de la flèche :
- une première section de flèche (7) de la flèche, la première section de flèche étant reliée de manière à être pliable à la section centrale de flèche de telle sorte que la première section de flèche puisse pivoter entre une position de travail déployée dans laquelle la première section de flèche s'étend vers l'extérieur à partir de la section centrale de flèche et une position de transport repliée dans laquelle la première section de flèche est repliée pour le transport ;
- un premier dispositif d'actionnement (30) pour faire pivoter le premier tronçon de flèche entre la position repliée de transport et la position déployée de travail ;
- une seconde section de flèche (8) de la flèche, la seconde section de flèche étant reliée de manière à être pliable à la première section de flèche de telle sorte que la seconde section de flèche puisse pivoter entre une position de travail déployée dans laquelle la seconde section de flèche s'étend vers l'extérieur à partir de la première section de flèche et une position de transport dans laquelle la seconde section de flèche est repliée pour le transport ; et
- un second dispositif d'actionnement (31) pour faire pivoter la seconde section de flèche entre la position repliée de transport et la position déployée de travail, le second dispositif d'actionnement comprenant un dispositif d'actionnement hydraulique ayant
- un vérin hydraulique (34a) comprenant
- une section de vérin reliée à l'une des première et deuxième sections de flèche ; et
- une structure de piston reliée à l'autre des première et deuxième sections de flèche, la structure de piston ayant une tête de piston (34b) reliée à une tige de piston (34d), et la section de vérin définissant une première sous-chambre de vérin (34c) située sur un premier côté de la tête de piston et une seconde sous-chambre de vérin (34e) située sur un second côté de la tête de piston, la tige de piston s'étendant dans la première sous-chambre de vérin ; et
- une source d'entraînement (38) pour actionner le vérin hydraulique afin de faire pivoter la seconde section de flèche entre la position repliée de transport et la position déployée de travail en alimentant le vérin hydraulique en fluide fonctionnel par une conduite d'alimentation (39) et en évacuant le fluide hydraulique du vérin hydraulique par une conduite d'évacuation (37), en provoquant ainsi l'extension ou la rétraction du vérin hydraulique ; et
- une soupape de sécurité de décharge de pression (35) prévue dans une conduite de sécurité hydraulique (36) ;
l'appareil à flèche étant configuré pour
- faire pivoter la première section de flèche de la position de transport repliée à la position de travail déployée alors que la seconde section de flèche est toujours en position de transport repliée par rapport à la première section de flèche ;
**caractérisé en ce que**
- la conduite de sécurité hydraulique relie la seconde sous-chambre du vérin à la conduite de décharge ;
l'appareil à flèche étant en outre **caractérisé en ce qu'**il est en outre configuré pour
- lors du pivotement de la première section de flèche vers la position de travail déployée, pousser la seconde section de flèche et/ou un composant de flèche affecté à la seconde section contre la section centrale de flèche et/ou un composant de flèche affecté à la section centrale, en augmentant ainsi une pression de chambre pour le fluide hydraulique dans la seconde sous-chambre de vérin ;
- ouvrir la soupape de sécurité de décharge de pression pour permettre au fluide hydraulique de s'écouler de la seconde sous-chambre de vérin en retour vers la conduite de décharge, si la pression de la chambre pour le fluide hydraulique dans la seconde sous-chambre de vérin atteint une valeur de pression seuil, en réduisant ainsi la pression de la chambre pour le fluide hydraulique dans la seconde sous-chambre de vérin ; et
- en réponse à la réduction de la pression de la chambre pour le fluide hydraulique dans la seconde sous-chambre de vérin, passer la seconde section de flèche de la position repliée de transport à une première position déployée différente de la position déployée de travail et située à proximité de la position repliée de transport.

2. Appareil à flèche selon la revendication 1, dans lequel au moins l'un du composant de flèche affecté à la section centrale et du composant de flèche affecté à la deuxième section comprend un dispositif de protection conçu pour protéger la section centrale de flèche au moins contre une collision avec la seconde section de flèche.

3. Appareil à flèche selon la revendication 2, dans lequel le dispositif de protection comprend un dispositif à galets, le dispositif à galets roulant sur la seconde section de flèche tandis que la seconde section de flèche est poussée contre le dispositif de protection.

4. Appareil à flèche selon la revendication 2 ou 3, dans lequel le dispositif de protection est situé sur un élément de châssis d'un châssis de flèche de la flèche.

5. Appareil à flèche selon au moins l'une des revendications 2 à 4, dans lequel le dispositif de protection est configuré pour protéger un composant fonctionnel affecté au fonctionnement de la flèche.

6. Appareil à flèche selon la revendication 5, dans lequel le composant fonctionnel comprend au moins un élément parmi
- un dispositif de commande d'actionnement configuré pour commander le fonctionnement d'au moins un des premier et deuxième dispositifs d'actionnement ;
- un dispositif de commande de distribution configuré pour commander le fonctionnement de distribution de la matière pulvérisée à travers la pluralité de dispositifs de distribution ; et
- une armoire configurée pour recevoir un ou plusieurs dispositifs affectés au fonctionnement de la flèche tels qu'au moins un parmi le premier dispositif d'actionnement, le dispositif de commande d'actionnement et le dispositif de commande de distribution.

7. Appareil à flèche selon au moins l'une des revendications précédentes, configuré en outre pour distribuer le matériau de pulvérisation à travers des premiers éléments de pulvérisation sur la première section de flèche à partir de la pluralité d'éléments pulvérisateurs, tandis que la première section de flèche est dans la position de travail déployée et la seconde section de flèche est dans la première position déployée.

8. Appareil à flèche selon au moins l'une des revendications précédentes, dans lequel le premier dispositif d'actionnement comprend un autre dispositif d'actionnement hydraulique.

9. Appareil à flèche selon au moins l'une des revendications précédentes, comprenant en outre un support de flèche, l'appareil à flèche étant en outre configuré pour un processus de levage afin de soulever la flèche du support de flèche tandis que les première et seconde sections de flèche sont toutes deux dans la position de transport repliée.

10. Appareil à flèche selon au moins l'une des revendications précédentes, dans lequel la première section de flèche et la seconde section de flèche s'étendent essentiellement le long d'une direction d'entraînement dans la position de transport repliée, la direction d'entraînement étant orientée transversalement par rapport à une extension de la première section de flèche et de la seconde section de flèche lorsqu'elles sont dans la position de travail déployée.

11. Appareil à flèche selon au moins l'une des revendications précédentes, dans lequel la première section de flèche et la seconde section de flèche sont dans une orientation sensiblement parallèle lorsque la première section de flèche et la seconde section de flèche sont toutes deux dans la position de transport repliée.

12. Appareil à flèche selon au moins l'une des revendications précédentes, configuré en outre pour passer la seconde section de flèche de la position de travail déployée à la première position déployée tandis que la première section de flèche est dans la position de travail déployée.

13. Appareil à flèche selon au moins l'une des revendications précédentes, comprenant
- un dispositif de détection configuré pour détecter des signaux de repliage indiquant au moins que la première section de flèche est en position repliée de transport ; et
- un dispositif de commande relié fonctionnellement au dispositif de détection et au second dispositif d'actionnement, et configuré pour fournir, en réponse aux signaux de repliage, des signaux de commande au second dispositif d'actionnement pour faire pivoter la seconde section de flèche vers la position de transport repliée.

14. Pulvérisateur agricole, comprenant le dispositif à flèche selon au moins l'une des revendications précédentes.

15. Procédé pour faire fonctionner un appareil à flèche d'un pulvérisateur agricole selon au moins l'une des revendications 1 à 13, comprenant
- le fait de faire pivoter la première section de flèche de la position repliée de transport à la position déployée de travail alors que la seconde section de flèche est encore en position repliée de transport par rapport à la première section de flèche ;
**caractérisé en ce que**
- lorsque la première section de flèche est pivotée vers la position de travail déployée, le fait de pousser la seconde section de flèche et/ou un composant de flèche affecté à la seconde section contre la section de flèche centrale et/ou un composant de flèche affecté à la section centrale, en augmentant ainsi une pression de chambre pour le fluide hydraulique dans la seconde sous-chambre de vérin ;
- le fait d'ouvrir la soupape de sécurité de décharge de pression pour permettre au fluide hydraulique de s'écouler de la seconde sous-chambre de vérin en retour vers la conduite de décharge si la pression de la chambre pour le fluide hydraulique dans la seconde sous-chambre de vérin atteint une valeur de pression seuil, en réduisant ainsi la pression de la chambre pour le fluide hydraulique dans la seconde sous-chambre de vérin ; et
- en réponse à la réduction de la pression de la chambre pour le fluide hydraulique dans la seconde sous-chambre de vérin, le fait de passer la seconde section de flèche de la position de transport repliée à une première position déployée située à proximité de la position de transport repliée.
